# EUROPEAN PATENT APPLICATION

(11) **EP 4 195 807 A1**
(43) Date of publication of application: **14.06.2023**
(21) Application number: 20948272.8
(22) Date of filing: 06.08.2020
(51) Int. Cl.: H04W 72/02, H04W 92/18

(54) **TERMINAL AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2020/030281
(87) International publication number: WO 2022/029984

(57) **Abstract**

A terminal includes a receiving unit configured to execute sensing of a signal that is transmitted from another terminal in a limited first period, a control unit configured to determine a set of resources that are available, by identifying a plurality of resources in a resource selection window, based on at least a part of a result of the sensing, and a transmitting unit configured to execute transmission to the another terminal by using a resource set selected from the set of resources, in which the control unit updates the resource set by identifying again the plurality of resources in the resource selection window, based on a result of the sensing in a second period, before executing the transmission.

## Description

### TECHNICAL FIELD

The present invention relates to a terminal and a communication method in a radio communication system.

### BACKGROUND ART

In long term evolution (LTE) and the successor system of LTE (for example, LTE advanced (LTE-A) and new radio (NR) (also referred to as 5G)), a device to device (D2D) technology has been discussed in which terminals perform direct communication with each other without using a base station (for example, Non-Patent Document 1).

D2D reduces traffic between the terminal and the base station, and enables communication between the terminals even when the base station is in a state where communication is not available during a disaster. Note that, in a 3rd generation partnership project (3GPP), D2D is referred to as a "sidelink", but herein, the more general term D2D is used. Here, in the description of the following embodiment, the sidelink is also used as necessary.

The D2D communication is classified broadly into D2D discovery for discovering other terminals that are capable of performing communication and D2D communication for performing direct communication between terminals (also referred to as D2D direct communication, terminal-to-terminal direct communication, and the like). Hereinafter, when the D2D communication, the D2D discovery, and the like are not particularly distinguished from each other, the D2D communication, the D2D discovery, and the like will be simply referred to as D2D. In addition, a signal to be transmitted and received in D2D will be referred to as a D2D signal. Various use cases of a service according to vehicle to everything (V2X) in NR have been discussed (for example, Non-Patent Document 2).

### CITATION LIST

### NON-PATENT DOCUMENT

Non-Patent Document 1: 3GPP TS 38.211 V16.2.0 (2020-06)
Non-Patent Document 2: 3GPP TR 22.886 V15.1.0 (2017-03)

### SUMMARY OF THE INVENTION

### PROBLEM TO BE SOLVED BY THE INVENTION

Power saving has been discussed as the enhancement of an NR sidelink. It is assumed that a terminal performing a power-saving operation (power saving UE) performs the transmission and reception of data only at a specific timing. When the terminal performing the power-saving operation executes re-evaluation or pre-emption in a resource allocation mode 2 in which a resource used for transmission is autonomously selected, there is a possibility that sensing information required for resource selection cannot be acquired.

The invention has been made in view of the circumstances described above, and an object thereof is to perform a sensing operation suitable for a power-saving operation, in terminal-to-terminal direct communication.

### MEANS FOR SOLVING PROBLEM

According to the disclosed technology, a terminal including: a receiving unit configured to execute sensing of a signal that is transmitted from another terminal in a limited first period; a control unit configured to determine a set of available resources by identifying a plurality of resources in a resource selection window, based on at least a part of a sensing result; and a transmitting unit configured to execute transmission to the another terminal by using a resource set selected from the set of resources, in which the control unit updates the resource set by identifying again the plurality of resources in the resource selection window, based on the sensing result in a second period, before executing the transmission, is provided.

### EFFECT OF THE INVENTION

According to the disclosed technology, it is possible to perform a sensing operation suitable for a power-saving operation, in terminal-to-terminal direct communication.

### BRIEF DESCRIPTION OF DRAWINGS

[Fig. 1] Fig. 1 is a diagram illustrating V2X;
[Fig. 2] Fig. 2 is a diagram illustrating Example (1) of a transmission mode of V2X;
[Fig. 3] Fig. 3 is a diagram illustrating Example (2) of the transmission mode of V2X;
[Fig. 4] Fig. 4 is a diagram illustrating Example (3) of the transmission mode of V2X;
[Fig. 5] Fig. 5 is a diagram illustrating Example (4) of the transmission mode of V2X;
[Fig. 6] Fig. 6 is a diagram illustrating Example (5) of the transmission mode of V2X;
[Fig. 7] Fig. 7 is a diagram illustrating Example (1) of a communication type of V2X;
[Fig. 8] Fig. 8 is a diagram illustrating Example (2) of the communication type of V2X;
[Fig. 9] Fig. 9 is a diagram illustrating Example (3) of the communication type of V2X;
[Fig. 10] Fig. 10 is a sequence diagram illustrating Operation Example (1) of V2X;
[Fig. 11] Fig. 11 is a sequence diagram illustrating Operation Example (2) of V2X;
[Fig. 12] Fig. 12 is a sequence diagram illustrating Operation Example (3) of V2X;
[Fig. 13] Fig. 13 is a sequence diagram illustrating Operation Example (4) of V2X;
[Fig. 14] Fig. 14 is a diagram illustrating an example of a sensing operation;
[Fig. 15] Fig. 15 is a diagram illustrating an example of a partial sensing operation;
[Fig. 16] Fig. 16 is a sequence diagram illustrating an example of reassessment;
[Fig. 17] Fig. 17 is a diagram illustrating an example of the reassessment; [Fig. 18] Fig. 18 is a sequence diagram illustrating an example of preemption;
[Fig. 19] Fig. 19 is a diagram illustrating Example (1) of the reassessment or the preemption in an embodiment of the invention;
[Fig. 20] Fig. 20 is a diagram illustrating Example (2) of the reassessment or the preemption in the embodiment of the invention;
[Fig. 21] Fig. 21 is a diagram illustrating Example (3) of the reassessment or the preemption in the embodiment of the invention;
[Fig. 22] Fig. 22 is a diagram illustrating an example of a functional structure of a base station 10 in the embodiment of the invention;
[Fig. 23] Fig. 23 is a diagram illustrating an example of a functional structure of a terminal 20 in the embodiment of the invention; and
[Fig. 24] Fig. 24 is a diagram illustrating an example of a hardware structure of the base station 10 or the terminal 20 in the embodiment of the invention.

### MODE(S) FOR CARRYING OUT THE INVENTION

Hereinafter, an embodiment of the invention will be described with reference to the drawings. Note that, the embodiment described below is an example, and an embodiment to which the invention is applied is not limited to the following embodiment.

In the operation of a radio communication system of the embodiment of the invention, the conventional technology is suitably used. However, the conventional technology, for example, is the conventional LTE, but is not limited to the conventional LTE. In addition, the term "LTE" used herein has a broad meaning including LTE-advanced and a scheme subsequent to the LTE-advanced (for example, NR), or a wireless local area network (LAN), unless otherwise noted.

In addition, in the embodiment of the invention, a duplex may be a time division duplex (TDD), may be a frequency division duplex (FDD), or may be other schemes (for example, a flexible duplex or the like).

In addition, in the embodiment of the invention, "configuring" a radio parameter or the like may mean pre-configuring a predetermined value, or may be configuring a radio parameter that is indicated by a base station 10 or a terminal 20.

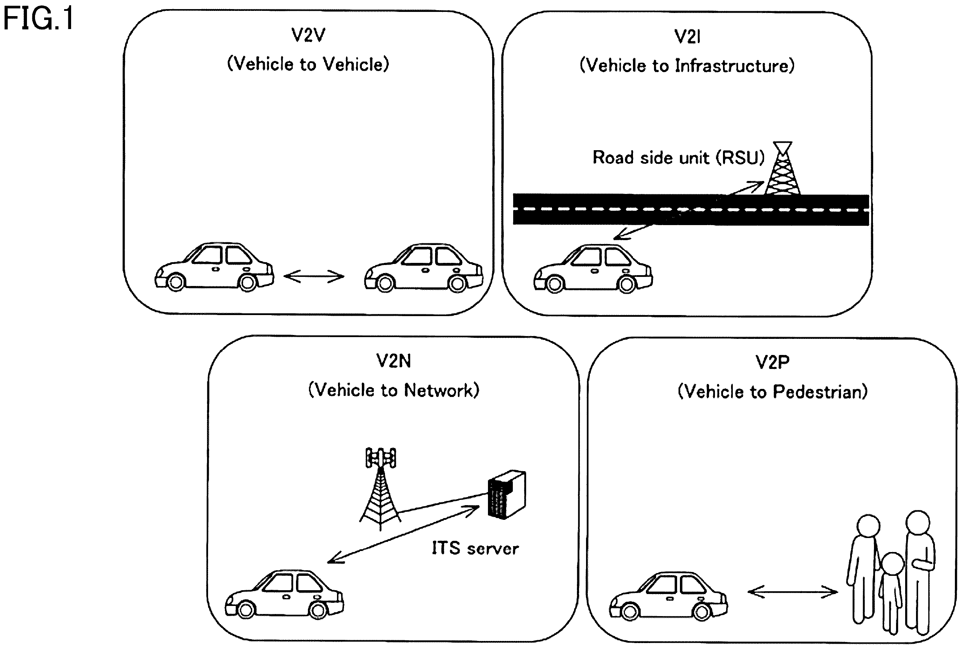

Fig. 1 is a diagram illustrating V2X. In 3GPP, it is discussed to implement vehicle to everything (V2X) or enhanced V2X (eV2X) by extending a D2D function, and the development of specifications thereof has progressed. As illustrated in Fig. 1, V2X is a part of intelligent transport systems (ITS), and is a generic term for: vehicle to vehicle (V2V) indicating a communication mode that is performed between vehicles; vehicle to infrastructure (V2I) indicating a communication mode that is performed between a vehicle and a road-side unit (RSU) to be provided on a roadside; vehicle to network (V2N) indicating a communication mode that is performed between a vehicle and an ITS server; and vehicle to pedestrian (V2P) indicating a communication mode that is performed between a vehicle and a mobile terminal carried by a pedestrian.

In addition, in 3GPP, V2X using cellular communication and terminal-to-terminal communication of LTE or NR have been discussed. V2X using the cellular communication is also referred to as cellular V2X. In V2X of NR, it has been discussed to achieve high capacity, low latency, high reliability, and quality of service (QoS) control.

Regarding V2X of LTE or NR, it is expected that discussions not limited to the 3GPP specification development will be held in the future. For example, it is expected that discussions will be held regarding: ensuring interoperability; reducing cost by implementing higher layers; a method for using together or switching a plurality of radio access technologies (RAT); regulation support in each country; data acquisition and delivering of a V2X platform of LTE or NR; and database management and a use method thereof.

In the embodiment of the invention, it is mainly expected that a communication device is mounted on a vehicle, but the embodiment of the invention is not limited thereto. For example, the communication device may be a terminal that is carried by a person, the communication device may be a device that is mounted on a drone or an air craft, or the communication device may be a base station, RSU, a relay station (relay node), a terminal having scheduling capability, and the like.

Note that, a sidelink (SL) may be distinguished from an uplink (UL) or a downlink (DL), based on one of the following 1) to 4) or a combination thereof. In addition, SL may be referred to as another name.
1) Resource arrangement in the time domain
2) Resource arrangement in the frequency domain
3) A synchronization signal to be referred to (including sidelink synchronization signal (SLSS))
4) A reference signal to be used in path-loss measurement for transmission power control

In addition, regarding orthogonal frequency division multiplexing (OFDM) of SL or UL, any of cyclic-prefix OFDM (CP-OFDM), Discrete Fourier Transform-Spread-OFDM (DFT-S-OFDM), OFDM without transform precoding, and OFDM with transform precoding may be applied.

In SL of LTE, regarding resource allocation of SL with respect to the terminal 20, Mode 3 and Mode 4 are defined. In Mode 3, a transmission resource is more dynamically allocated by downlink control information (DCI) that is transmitted from the base station 10 to the terminal 20. In addition, in Mode 3, semi persistent scheduling (SPS) can be performed. In Mode 4, the terminal 20 autonomously selects the transmission resource from a resource pool.

Note that, a slot in the embodiment of the invention may be replaced with a symbol, a mini slot, a subframe, a radio frame, and a transmission time interval (TTI). In addition, a cell in the embodiment of the invention may be replaced with a cell group, a carrier component, BWP, a resource pool, a resource, a radio access technology (RAT), a system (including a radio LAN), and the like.

Note that, in the embodiment of the invention, the terminal 20 is not limited to a V2X terminal, and may be all types of terminals that perform D2D communication. For example, the terminal 20 may be a terminal that is carried by a user, such as a smartphone, or may be an internet of things (IoT) device such as a smart meter.

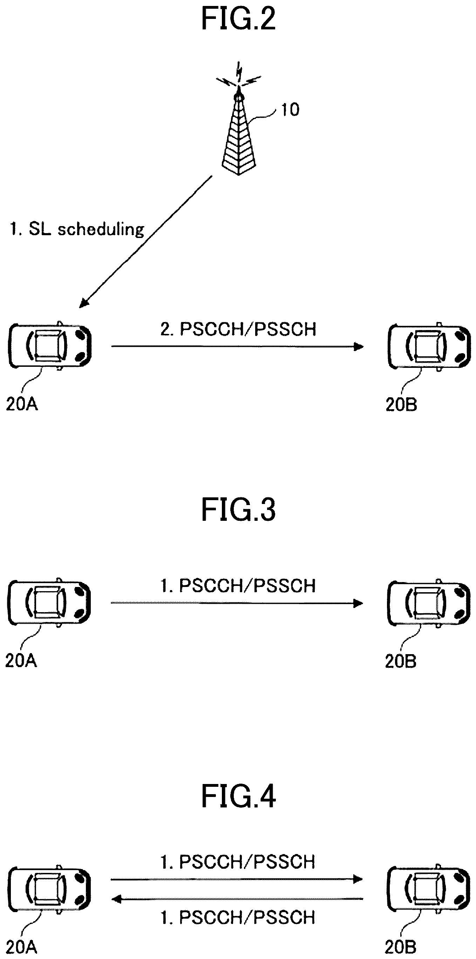

Fig. 2 is a diagram illustrating Example (1) of a transmission mode of V2X. In the transmission mode of the sidelink communication illustrated in Fig. 2, in Step 1, the base station 10 transmits sidelink scheduling to a terminal 20A. Subsequently, the terminal 20A transmits a physical sidelink control channel (PSCCH) and a physical sidelink shared channel (PSSCH) to a terminal 20B, based on the received scheduling (Step 2). The transmission mode of the sidelink communication illustrated in Fig. 2 may be referred to as a sidelink transmission mode 3 in LTE. In the sidelink transmission mode 3 in LTE, Uu based sidelink scheduling is performed. Uu is a radio interface between a universal terrestrial radio access network (UTRAN) and a user equipment (UE). Note that, the transmission mode of the sidelink communication illustrated in Fig. 2 may be referred to as a sidelink transmission mode 1 in NR.

Fig. 3 is a diagram illustrating Example (2) of the transmission mode of V2X. In the transmission mode of the sidelink communication illustrated in Fig. 3, in Step 1, the terminal 20A transmits PSCCH and PSSCH to the terminal 20B by using the autonomously selected resource. The transmission mode of the sidelink communication illustrated in Fig. 3 may be referred to as a sidelink transmission mode 4 in LTE. In the sidelink transmission mode 4 in LTE, the UE itself executes resource selection.

Fig. 4 is a diagram illustrating Example (3) of the transmission mode of V2X. In the transmission mode of the sidelink communication illustrated in Fig. 4, in Step 1, the terminal 20A transmits PSCCH and PSSCH to the terminal 20B by using the autonomously selected resource. Similarly, the terminal 20B transmits PSCCH and PSSCH to the terminal 20A by using the autonomously selected resource (Step 1). The transmission mode of the sidelink communication illustrated in Fig. 4 may be referred to as a sidelink transmission mode 2a in NR. In the sidelink transmission mode 2 in NR, the terminal 20 itself executes the resource selection.

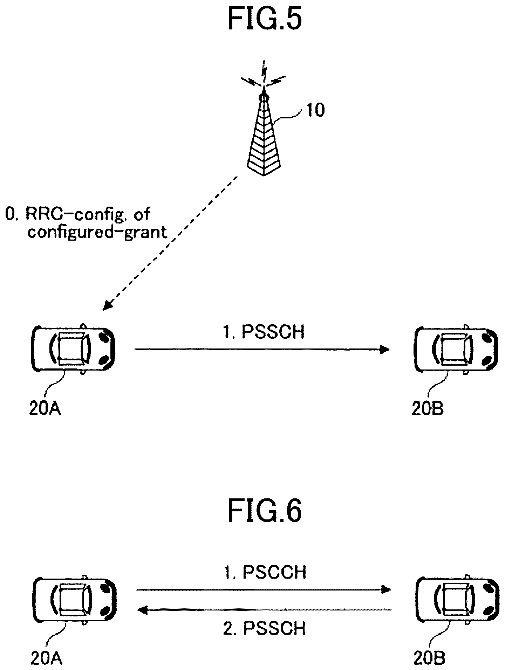

Fig. 5 is a diagram illustrating Example (4) of the transmission mode of V2X. In the transmission mode of the sidelink communication illustrated in Fig. 5, in Step 0, the base station 10 transmits the grant of the sidelink to the terminal 20A through radio resource control (RRC) configuration. Subsequently, the terminal 20A transmits PSSCH to the terminal 20B, based on the received resource pattern (Step 1). The transmission mode of the sidelink communication illustrated in Fig. 5 may be referred to as a sidelink transmission mode 2c in NR.

Fig. 6 is a diagram illustrating Example (5) of the transmission mode of V2X. In the transmission mode of the sidelink communication illustrated in Fig. 6, in Step 1, the terminal 20A transmits the sidelink scheduling to the terminal 20B through PSCCH. Subsequently, the terminal 20B transmits the PSSCH to the terminal 20A, based on the received scheduling (Step 2). The transmission mode of the sidelink communication illustrated in Fig. 6 may be referred to as a sidelink transmission mode 2d in NR.

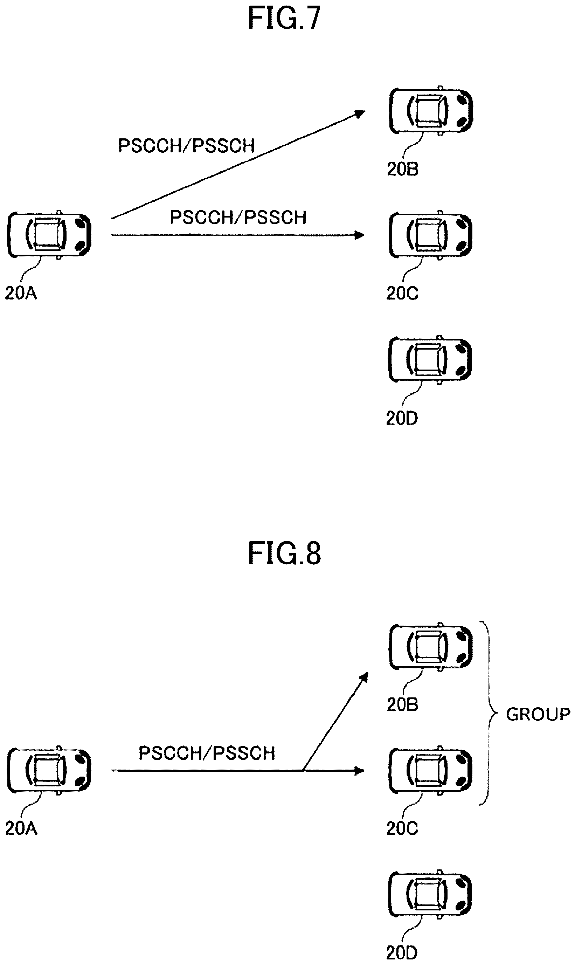

Fig. 7 is a diagram illustrating Example (1) of a communication type of V2X. The communication type of the sidelink illustrated in Fig. 7 is unicast. The terminal 20A transmits PSCCH and PSSCH to the terminal 20. In the example illustrated in Fig. 7, the terminal 20A performs unicast with respect to the terminal 20B, and performs unicast with respect to a terminal 20C.

Fig. 8 is a diagram illustrating Example (2) of the communication type of V2X. The communication type of the sidelink illustrated in Fig. 8 is groupcast. The terminal 20A transmits PSCCH and PSSCH to a group to which one or a plurality of terminals 20 belong. In the example illustrated in Fig. 8, the group includes the terminal 20B and the terminal 20C, and the terminal 20A performs groupcast with respect to the group.

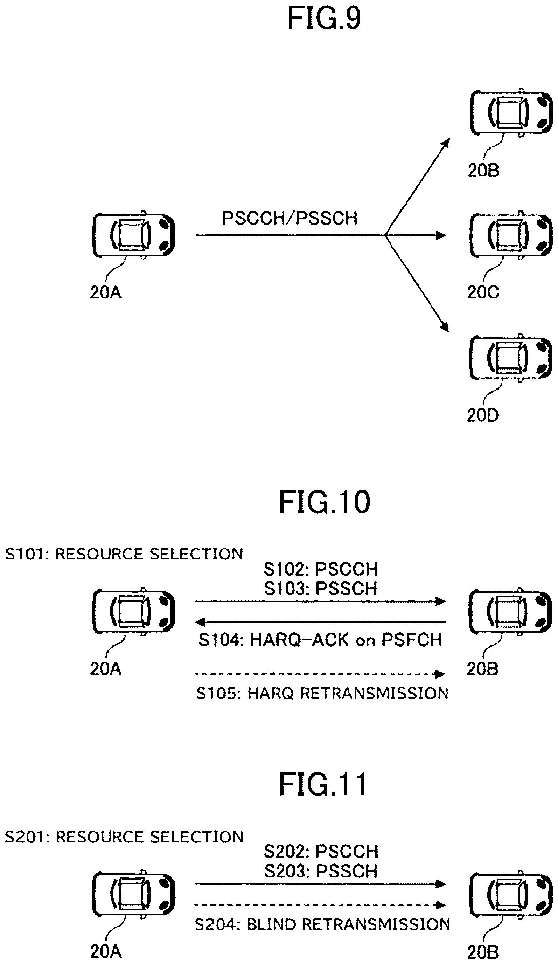

Fig. 9 is a diagram illustrating Example (3) of the communication type of V2X. The communication type of the sidelink illustrated in Fig. 9 is broadcast. The terminal 20A transmits PSCCH and PSSCH to one or a plurality of terminals 20. In the example illustrated in Fig. 9, the terminal 20A performs broadcast with respect to the terminal 20B, the terminal 20C, and a terminal 20D. Note that, the terminal 20A illustrated in Fig. 7 to Fig. 9 may be referred to as a header-UE.

In addition, in NR-V2X, it is expected that a hybrid automatic repeat request (HARQ) is supported by the unicast and the groupcast of the sidelink. Further, in NR-V2X, sidelink feedback control information (SFCI) including a HARQ response is defined. Further, it is discussed that SFCI is transmitted through a physical sidelink feedback channel (PSFCH).

Note that, in the following description, in the transmission of HARQ-ACK in the sidelink, PSFCH is used, which is an example. For example, the transmission of HARQ-ACK in the sidelink may be performed by using PSCCH, the transmission of HARQ-ACK in the sidelink may be performed by using PSSCH, or the transmission of HARQ-ACK in the sidelink may be performed by using another channel.

Hereinafter, for convenience sake, the overall information that is reported by the terminal 20 in HARQ will be referred to as HARQ-ACK. Such HARQ-ACK may be referred to as HARQ-ACK information. In addition, more specifically, a codebook to be applied to the HARQ-ACK information that is reported to the base station 10 and the like from the terminal 20 will be referred to as a HARQ-ACK codebook. The HARQ-ACK codebook defines a bit sequence of the HARQ-ACK information. Note that, not only ACK but also NACK are transmitted by "HARQ-ACK".

Fig. 10 is a sequence diagram illustrating Operation Example (1) of V2X. As illustrated in Fig. 10, the radio communication system according to the embodiment of the invention may include the terminal 20A and the terminal 20B. Note that, in practice, there are a plurality of user equipments, and, as the example of Fig. 10, the terminal 20A and the terminal 20B are illustrated.

Hereinafter, when the terminals 20A and 20B, and the like are not particularly distinguished from each other, the terminals 20A and 20B, and the like will be simply described as the "terminal 20" or the "user equipment". In Fig. 10, as an example, a case where both the terminal 20A and the terminal 20B are within the coverage of the cell is illustrated, but the operation of the embodiment of the invention can also be applied to a case where the terminal 20B is out of the coverage.

As described above, in this embodiment, the terminal 20, for example, is a device mounted on a vehicle such as an automobile, and has a cellular communication function and a sidelink function as UE in LTE or NR. The terminal 20 may be a typical portable terminal (a smartphone and the like). In addition, the terminal 20 may be RSU. RSU described above may be UE type RSU having the function of UE, or may be gNB type RSU having the function of a base station device.

Note that, it is not necessary that the terminal 20 is to be a device with one housing, and for example, even in a case where various sensors are dispersedly arranged in a vehicle, a device including the various sensors may be the terminal 20.

In addition, processing details of the transmission data of the sidelink of the terminal 20 are basically identical to processing details of UL transmission in LTE or NR. For example, the terminal 20 scrambles and modulates a codeword of transmission data to generate complex-valued symbols, maps the complex-valued symbols (transmission signals) to one or two layers, and performs precoding. Then, the terminal 20 maps the precoded complex-valued symbols to a resource element to generate a transmission signal (Example: a complex-valued time-domain SC-FDMA signal), and transmits the transmission signal from each antenna port.

Note that, the base station 10 has a cellular communication function as a base station in LTE or NR, and a function of enabling the communication of the terminal 20 in this embodiment (Example: resource pool configuration, resource allocation, and the like). In addition, the base station 10 may be RSU (gNB type RSU).

In addition, in the radio communication system according to the embodiment of the invention, a signal waveform that is used by the terminal 20 in SL or UL may be OFDMA, may be SC-FDMA, or may be other signal waveforms.

In step S101, the terminal 20A autonomously selects a resource to be used for the PSCCH and the PSSCH from a resource selection window having a predetermined period. The resource selection window may be configured by the base station 10 to the terminal 20.

In Step S102 and Step S103, the terminal 20A transmits sidelink control information (SCI) via PSCCH and/or PSSCH, and transmits SL data via PSSCH, using the resource autonomously selected in Step S101. For example, the terminal 20A may transmit PSCCH with a time resource that is same as at least a part of the time resource of PSSCH, by using a frequency resource adjacent to a frequency resource of PSSCH.

The terminal 20B receives SCI (PSCCH and/or PSSCH) and the SL data (PSSCH) transmitted from the terminal 20A. The received SCI may include the information of the resource of PSFCH for the terminal 20B to transmit HARQ-ACK in response to reception of the data. The terminal 20A may include the information of the autonomously selected resource in SCI to transmit the information.

In Step S104, the terminal 20B transmits HARQ-ACK in response to the received data to the terminal 20A by using the resource of PSFCH determined from the received SCI.

In Step S105, in a case where HARQ-ACK received in Step S104 indicates that retransmission is requested, that is, in a case where it is a negative response (NACK), the terminal 20A retransmits PSCCH and PSSCH to the terminal 20B. The terminal 20A may retransmit PSCCH and PSSCH by using the autonomously selected resource.

Note that, in a case where HARQ control is not executed, Step S104 and Step S105 need not be executed.

Fig. 11 is a sequence diagram illustrating Operation Example (2) of V2X. Blind retransmission, which is not based on the HARQ control, for improving a success rate or a reaching distance of the transmission may be executed.

In Step S201, the terminal 20A autonomously selects the resource that is to be used for PSCCH and PSSCH from the resource selection window having a predetermined period. The resource selection window may be configured in the terminal 20 by the base station 10.

In Step S202 and Step S203, the terminal 20A transmits SCI via PSCCH and/or PSSCH, and transmits the SL data via PSSCH, using the resource autonomously selected in Step S201. For example, the terminal 20A may transmit PSCCH with a time resource that is same as at least a part of the time resource of PSSCH, using a frequency resource adjacent to the frequency resource of PSSCH.

In Step S204, the terminal 20A retransmits SCI via PSCCH and/or PSSCH and the SL data via PSSCH to the terminal 20B by using the resource autonomously selected in Step S201. The retransmission in Step S204 may be executed a plurality of times.

Note that, in a case where the blind retransmission is not executed, Step S204 need not be executed.

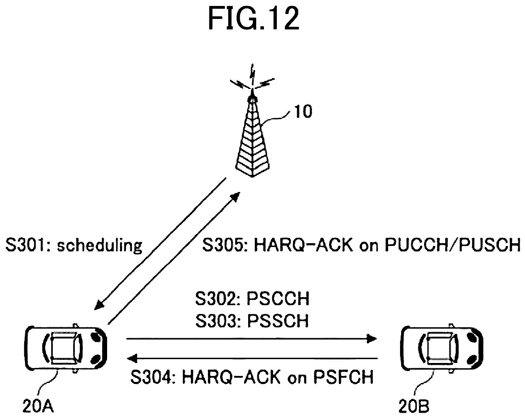

Fig. 12 is a sequence diagram illustrating Operation Example (3) of V2X. The base station 10 may perform the sidelink scheduling. That is, the base station 10 may determine a resource of the sidelink that is used by the terminal 20, and may transmit information indicating the resource to the terminal 20. Further, in a case where the HARQ control is applied, the base station 10 may transmit information indicating the resource of PSFCH to the terminal 20.

In Step S301, the base station 10 sends downlink control information (DCI) to the terminal 20A via PDCCH, thereby performing the SL scheduling. Hereinafter, for convenience sake, DCI for SL scheduling will be referred to as SL scheduling DCI.

In addition, in Step S301, it is expected that the base station 10 also transmits DCI for DL scheduling (may be referred to as DL allocation) to the terminal 20A via PDCCH. Hereinafter, for convenience sake, DCI for DL scheduling will be referred to as DL scheduling DCI. The terminal 20A that has received DL scheduling DCI receives DL data via PDSCH, using a resource that is specified by DL scheduling DCI.

In Step S302 and Step S303, the terminal 20A transmits the sidelink control information (SCI) via PSCCH and/or PSSCH, and transmits the SL data via PSSCH, using the resource specified by SL scheduling DCI. Note that, in SL scheduling DCI, only the resource of PSSCH may be specified. In this case, for example, the terminal 20A may transmit PSCCH with a time resource that is same as at least a part of the time resource of PSSCH, using a frequency resource adjacent to the frequency resource of PSSCH.

The terminal 20B receives SCI (PSCCH and/or PSSCH) and the SL data (PSSCH) transmitted from the terminal 20A. SCI received via PSCCH and/or PSSCH includes information of the resource of PSFCH for the terminal 20B to transmit HARQ-ACK in response to reception of the data.

The information of the resource is included in DL scheduling DCI or SL scheduling DCI that is transmitted from the base station 10 in Step S301, and the terminal 20A acquires the information of the resource from the DL scheduling DCI or the SL scheduling DCI and includes the information in SCI. Alternatively, DCI to be transmitted from the base station 10 need not include the information of the resource, and the terminal 20A may autonomously include the information of the resource in SCI to transmit the information.

In Step S304, the terminal 20B transmits HARQ-ACK in response to the received data to the terminal 20A by using the resource of PSFCH determined from the received SCI.

In Step S305, the terminal 20A, for example, transmits HARQ-ACK by using a resource of a physical uplink control channel (PUCCH) specified by DL scheduling DCI (or SL scheduling DCI), and the base station 10 receives HARQ-ACK, at a timing specified by DL scheduling DCI (or SL scheduling DCI) (for example, a timing in unit of slots ). In the HARQ-ACK codebook, ARQ-ACK that is generated based on HARQ-ACK that is received from the terminal 20B or based on PSFCH that is not received from the terminal 20B, and HARQ-ACK in response to the DL data can be included. Here, in a case where there is no allocation of the DL data, HARQ-ACK in response to the DL data is not included. In NR Rel.16, in the HARQ-ACK codebook, HARQ-ACK in response to the DL data is not included.

Note that, in a case where the HARQ control is not executed, Step S304 and Step S305 need not be executed.

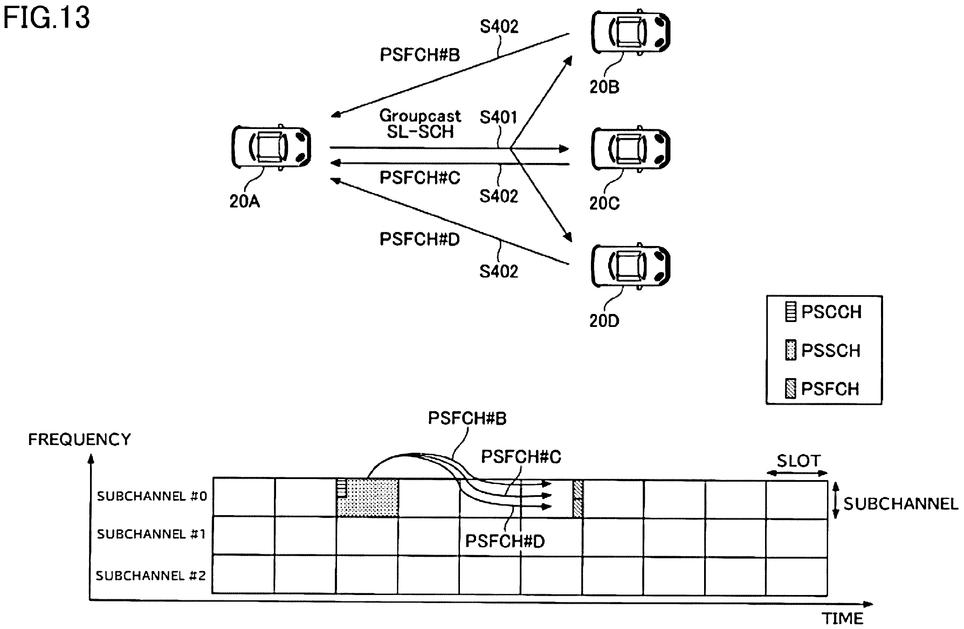

Fig. 13 is a sequence diagram illustrating Operation Example (4) of V2X. As described above, in the sidelink of NR, it is supported that the HARQ response is to be transmitted via PSFCH. Note that, as the format of PSFCH, for example, the same format as a physical uplink control channel (PUCCH) format 0 can be used. That is, the format of PSFCH may be a sequence-based format in which a physical resource block (PRB) size is 1, and ACK and NACK are identified by a difference in a sequence and/or a cyclic shift. The format of PSFCH is not limited thereto. The resource of PSFCH may be arranged in a symbol at the end of the slot or in a plurality of symbols at the end of the slot. In addition, whether or not a period N is configured for the PSFCH resource is defined in advance. The period N may be configured in unit of slots, or may be defined in advance.

In Fig. 13, the vertical axis corresponds to the frequency domain, and the horizontal axis corresponds to the time domain. PSCCH may be arranged in one symbol at the head of the slot, may be arranged in a plurality of symbols from the head of the slot, or may be arranged in a plurality of symbols from a symbol that is not at the head of the slot. PSFCH may be arranged in one symbol at the end of the slot, or may be arranged in a plurality of symbols at the end of the slot. In the example illustrated in Fig. 13, three subchannels are configured in the resource pool, and two PSFCHs are arranged in the third slot after a slot in which PSSCH is arranged. An arrow to PSFCH from PSSCH indicates an example of PSFCH that is associated with PSSCH.

In a case where the HARQ response in the groupcast of NR-V2X is a groupcast option 2 for transmitting ACK or NACK, it is necessary to determine a resource that is used in the transmission and reception of PSFCH. As illustrated in Fig. 13, in Step S401, the terminal 20A, which is a transmission side terminal 20, performs groupcast with respect to the terminal 20B, the terminal 20C, and the terminal 20D, which are reception side terminals 20, via SL-SCH. Subsequently, in Step S402, the terminal 20B uses PSFCH#B, the terminal 20C uses PSFCH#C, and the terminal 20D uses PSFCH#D to transmit the HARQ response to the terminal 20A. Here, as illustrated in the example of Fig. 13, in a case where the number of available resources of PSFCH is less than the number of reception side terminals 20 belonging to the group, it is necessary to determine how to allocate the resources of PSFCH. Note that, the transmission side terminal 20 may have the number of reception side terminals 20 in the groupcast. Note that, in a groupcast option 1, only NACK is transmitted as the HARQ response, and thus ACK is not transmitted.

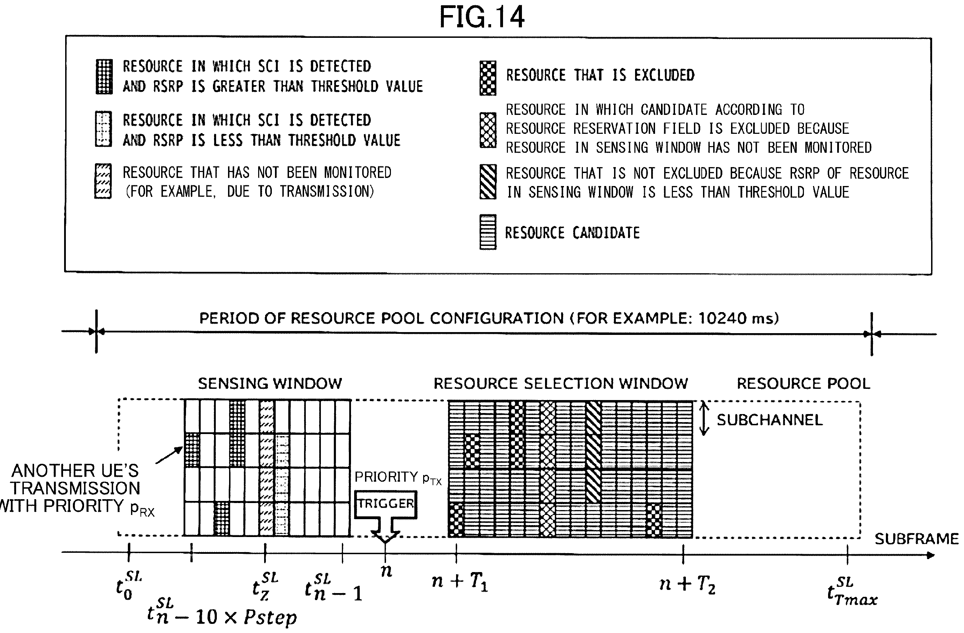

Fig. 14 is a diagram illustrating an example of a sensing operation. In a case where partial sensing is not configured by a higher layer in an LTE sidelink, as illustrated in Fig. 14, the terminal 20 performs transmission by selecting a resource. As illustrated in Fig. 14, the terminal 20 executes sensing in a sensing window in the resource pool. By executing the sensing, the terminal 20 receives a resource reservation field that is included in SCI to be transmitted from another terminal 20, and identifies available resource candidates in the resource selection window in the resource pool, based on the field. Subsequently, the terminal 20 randomly selects a resource from the available resource candidates. Sensing all the resources in the sensing window may be referred to as full sensing.

In addition, as illustrated in Fig. 14, the configuration of the resource pool may have a period. For example, the period may be a period of 10,240 milliseconds. Fig. 14 is an example in which subframes from a subframe t₀^{SL} to a subframe t_{Tmax}^{SL} are configured as the resource pool. The domain of the resource pool in the period may be configured by a bitmap, for example.

In addition, as illustrated in Fig. 14, a transmission trigger in the terminal 20 occurs in a subframe n, and the transmission priority is p_{TX}. The terminal 20, for example, is capable of detecting that another terminal 20 performs transmission with a priority p_{RX}, in the sensing window from a subframe t_{n-10×Pstep}^{SL} to a subframe tₙ₋₁^{SL}. In a case where SCI is detected in the sensing window, and an RSRP is greater than a threshold value, the resource in the resource selection window corresponding to the SCI is excluded. In addition, in a case where SCI is detected in the sensing window, and RSRP is less than the threshold value, the resource in the resource selection window corresponding to the SCI is not excluded. The threshold value, for example, may be a threshold value Th_{pTX, pRX} to be configured or defined for each resource in the sensing window, based on the priority p_{TX} and the priority p_{RX}.

In addition, as with a subframe t_{Z}^{SL} illustrated in Fig. 14, a resource in the resource selection window to be a candidate of resource reservation information corresponding to a resource that has not been monitored, for example, due to transmission, in the sensing window, is excluded.

As illustrated in Fig. 14, in the resource selection window from a subframe n+T₁ to a subframe n+T₂, a resource occupied by another UE is identified, and resources excluding the resource are the available resource candidates. In a case where a set of available resource candidates is denoted as S_{A}, and S_{A} is less than 20% of the resources in the resource selection window, the threshold value Th_{pTX}, p_{RX} that is configured for each resource in the sensing window may be increased by 3dB, and the identification of the resource may be executed again. That is, the threshold value Th_{pTX}, p_{RX} is increased, and the identification of the resource is executed again, and thus, the resources that are not excluded because of RSRP being less than the threshold value may be increased. Further, a RSSI of each of the resources of S_{A} may be measured, and a resource with the minimum RSSI may be added to a set S_{B}. An operation of adding the resource with the minimum RSSI included in S_{A} to S_{B} may be repeated until the set of resource candidates S_{B} becomes greater than or equal to 20% of the resource selection window.

A lower layer of the terminal 20 may report S_{B} to a higher layer. The higher layer of the terminal 20 may determine a resource to be used, by executing random selection with respect to S_{B}. The terminal 20 may execute sidelink transmission by using the determined resource. Note that, after ensuring the resources, the terminal 20 may periodically use the resources without performing the sensing a predetermined number of times (for example, Cᵣₑₛₑₗ times) .

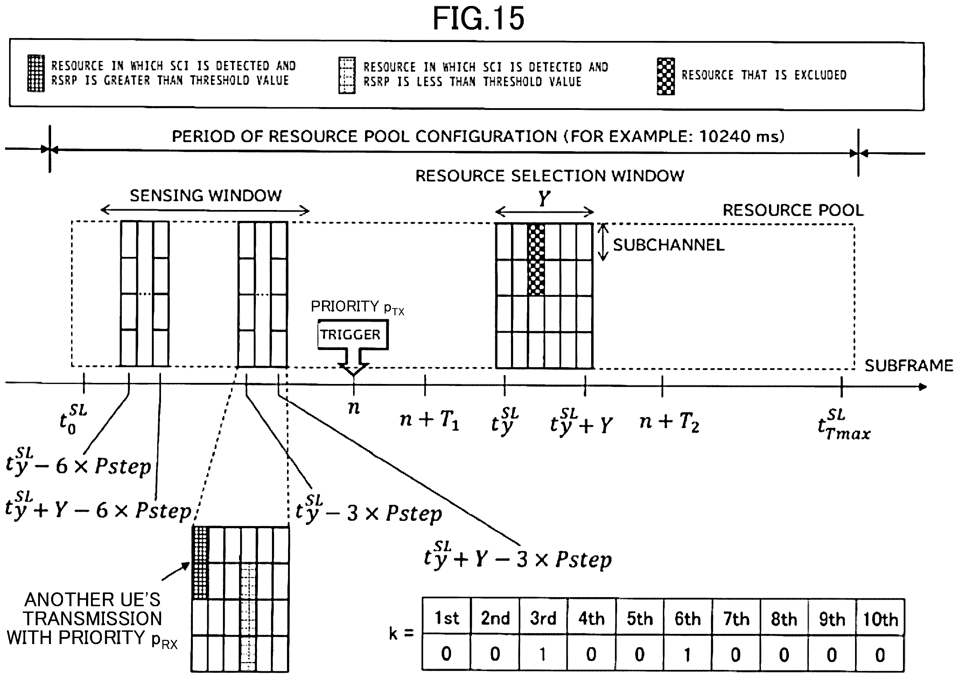

Fig. 15 is a diagram illustrating an example of a partial sensing operation. In a case where the partial sensing is configured by the higher layer in the LTE sidelink, the terminal 20 performs transmission by selecting a resource as illustrated in Fig. 15. As illustrated in Fig. 15, the terminal 20 executes the partial sensing with respect to a part of the sensing window in the resource pool. By executing the partial sensing, the terminal 20 receives a resource reservation field that is included in SCI to be transmitted from another terminal 20, and identifies the available resource candidates in the resource selection window in the resource pool, based on the field. Subsequently, the terminal 20 randomly selects a resource from the available resource candidates.

In addition, as illustrated in Fig. 15, the configuration of the resource pool may have a period. For example, the period may be a period of 10,240 milliseconds. Fig. 15 is an example in which subframes from the subframe t₀^{SL} to the subframe t_{Tmax}^{SL} are configured as the resource pool. The domain of the resource pool in the period may be configured by a bitmap, for example.

As shown in Fig. 15, it is assumed that a transmission trigger in the terminal 20 is generated in the subframe n and the priority of the transmission is p_{TX}. As shown in Fig. 15, among the subframes n+T₁ to n+T₂, Y subframes from the subframe t_{y}^{SL} to the subframe t_{y+Y}^{SL} may be configured as a resource selection window. In addition, as shown in Fig. 15, it is assumed that a transmission trigger in the terminal 20 is generated in the subframe n and the priority of the transmission is p_{TX}.

The terminal 20 can detect, for example, that another terminal 20 is performing transmission with the priority p_{RX} in one or more sensing windows having a Y subframe length from the subframe t_{y-k×PStep}^{SL} to the subframe t_{y+Y-k×PStep}^{SL}. k may be, for example, a 10-bit bitmap. Fig. 15 shows an example in which the third and sixth bits of the bitmap k are configured to "1" indicating that partial sensing is to be performed. That is, in Fig. 15, subframes from t_{y-6×Pstep}^{SL} to t_{y+Y-6×Pstep}^{SL} and subframes from t_{y-3×Pstep}^{SL} to t_{y+Y-3×Pstep}^{SL} are configured as a sensing window. As described above, the i-th bit of the bitmap k may correspond to a sensing window from the subframe t_{y-i×Pstep}^{SL} to the subframe t_{y+Y-i×Pstep}^{SL}.

In a case where the SCI is detected in the one or more sensing windows and the RSRP exceeds the threshold value, the resources in the resource selection window corresponding to the SCI are excluded. In addition, in a case where the SCI is detected in the sensing window and the RSRP is less than the threshold value, the resources in the resource selection window corresponding to the SCI are not excluded. The threshold value may be, for example, a threshold value Th_{pTX}, p_{RX} configured or defined for each resource in the sensing window based on the priority p_{TX} and the priority p_{RX}.

In the resource selection window in which the Y subframes are configured, the terminal 20 identifies resources occupied by another UE, and resources excluding the resources become available resource candidates. Assuming that the set of available resource candidates is S_{A}, in a case where S_{A} is less than 20% of the resources in the resource selection window, the threshold value Th_{pTX}, p_{RX} configured for each resource in the sensing window may be increased by 3 dB and resource identification may be performed again. That is, by increasing the threshold value Th_{pTX}, p_{RX} and performing the resource identification again, resources that are not excluded because the RSRP is less than the threshold value may be increased. In addition, the RSSI of each resource of S_{A} may be measured, and a resource having a smallest RSSI may be added to a set S_{B}. The operation of adding a resource having a smallest RSSI included in S_{A} to S_{B} may be repeated until the set S_{B} of the resource candidates becomes 20% or more of the resource selection window.

The lower layer of the terminal 20 may report S_{B} to the upper layer. The upper layer of the terminal 20 performs random selection with respect to S_{B} to determine the resources to be used. The terminal 20 may perform sidelink transmission by using the determined resources. Note that, once the resources are secured, thereafter, the terminal 20 may use the resources periodically without performing sensing a predetermined number of times (for example, Cᵣₑₛₑₗ times) .

Although the operation of the transmission side terminal 20 has been described with reference to Figs. 14 and 15 described above, the reception side terminal 20 may detect data transmission from another terminal 20 based on the result of sensing or partial sensing and may receive the data from the another terminal 20.

In a NR release 17 sidelink, power saving based on the random resource selection and the partial sensing described above is being discussed. For example, for the sake of power saving, a method based on the random resource selection and the partial sensing of a sidelink in LTE release 14 may be applied to a resource allocation mode 2 of a NR release 16 sidelink. The terminal 20 to which the partial sensing is applied executes the reception and the sensing only in a specific slot in the sensing window.

In addition, in the NR release 17 sidelink, enhanced ultra reliable low latency communication (eURLLC) is being discussed by using terminal-to-terminal coordination (inter-UE coordination) as a base line. For example, the terminal 20A may share information indicating a resource set with the terminal 20B, and the terminal 20B may consider the information in the resource selection for transmission.

On the other hand, in the NR release 16 sidelink, a pre-emption function and a re-evaluation function are adopted. The pre-emption and the re-evaluation are functions for the resource allocation mode 2 in which the terminal 20 autonomously selects a resource to be transmitted, but may be used in the mode 1.

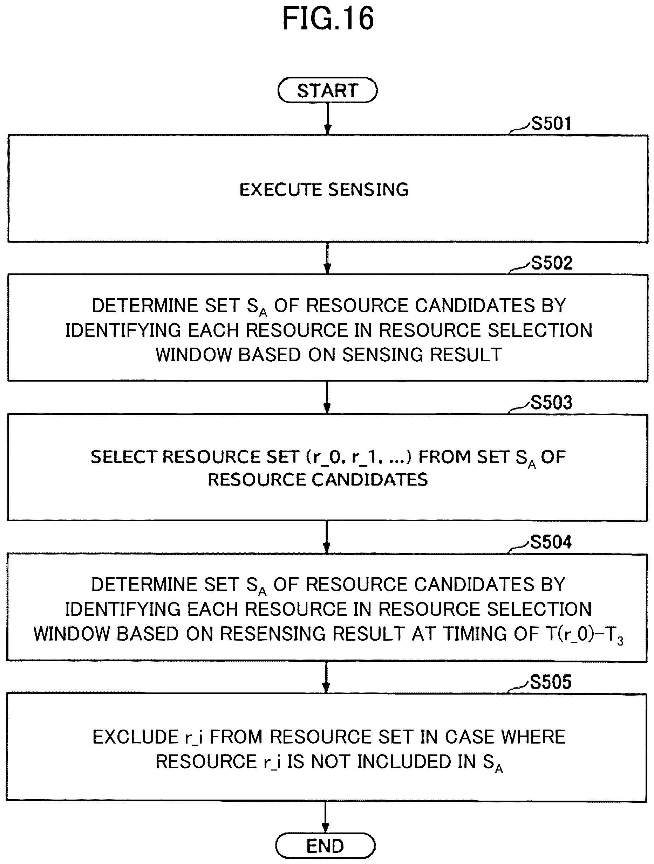

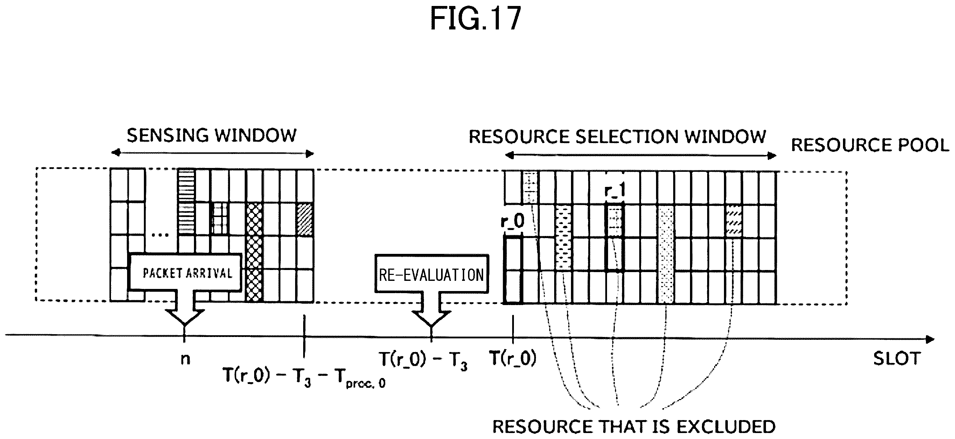

Fig. 16 is a sequence diagram illustrating an example of the re-evaluation. Fig. 17 is a diagram illustrating an example of the re-evaluation. In Step S501, the terminal 20 executes the sensing in the sensing window. In a case where the terminal 20 performs a power-saving operation, the sensing may be executed in a limited period that is defined in advance. Subsequently, the terminal 20 determines a set S_{A} of resource candidates by identifying each of the resources in the resource selection window, based on a sensing result (S502). Subsequently, the terminal 20 selects a resource set (r_0, r_1, ...) from the set S_{A} of resource candidates (S503).

In Step S504, the terminal 20 determines the set S_{A} of resource candidates by identifying again each of the resources in the resource selection window at a timing of T(r_0)-T₃ illustrated in Fig. 17, based on the sensing result. Subsequently, in a case where the resource r_i is not included in S_{A}, the terminal 20 updates the resource set by excluding r_i from the resource set (S505), and ends the re-evaluation.

In the example of the re-evaluation illustrated in Fig. 17, in the resource r_0 and the resource r_1, r_1 is not included in S_{A}, in accordance with a resensing result, and thus, is excluded from the resource set. Therefore, the terminal 20 executes transmission by using the resource r_0.

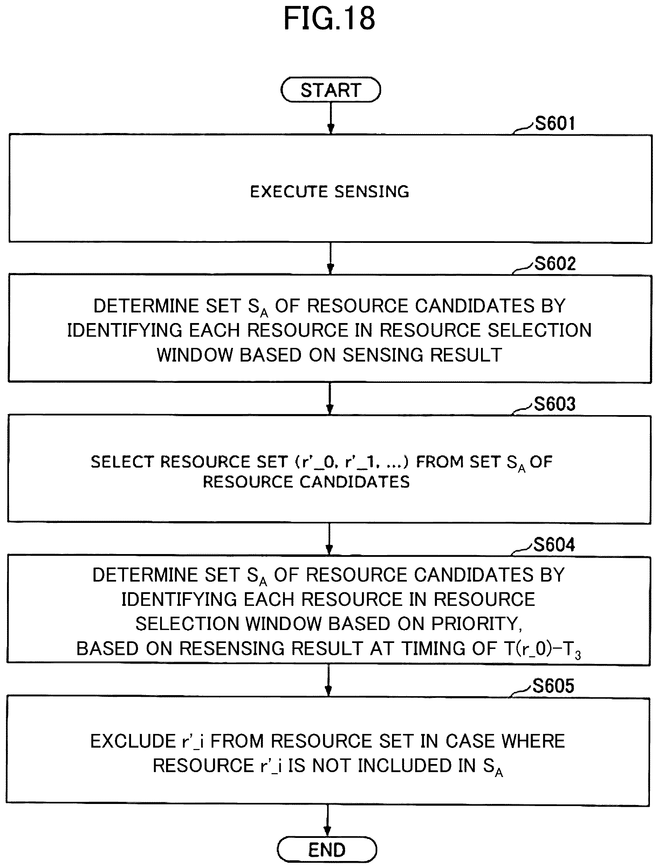

Fig. 18 is a sequence diagram illustrating an example of the preemption. In Fig. 17, the operation is described by substituting the "re-evaluation" with the "pre-emption", and "r_0" and "r_1" with "r'_0" and "r'_1". In Step S601, the terminal 20 executes the sensing in the sensing window. In a case where the terminal 20 performs the power-saving operation, the sensing may be executed in the limited period that is defined in advance. Subsequently, the terminal 20 determines the set S_{A} of resource candidates by identifying each of the resources in the resource selection window, based on the sensing result (S602). Subsequently, the terminal 20 selects the resource set (r'_0, r'_1, ...) from the set S_{A} of resource candidates (S603).

In Step S604, the terminal 20 determines the set S_{A} of resource candidates by identifying again each of the resources in the resource selection window, based on the priority, at the timing of T(r_0)-T₃ illustrated in Fig. 17, based on the sensing result. For example, by the resensing of r'_1 illustrated in Fig. 17, SCI transmitted from another terminal 20 is detected. In a case where the pre-emption is enabled, and a value prio_RX indicating the priority of SCI transmitted from another terminal 20 is less than a value prio_TX indicating the priority of a transport block transmitted from the terminal 20 itself, the terminal 20 excludes the resource r'_1 from S_{A}. Note that, the priority increases as the value indicating the priority decreases. That is, in a case where the value prio_RX indicating the priority of SCI transmitted from another terminal 20 is greater than the value prio_TX indicating the priority of the transport block transmitted from the terminal 20 itself, the terminal 20 does not exclude the resource r'_1 from S_{A}.

In Step S605, in a case where the resource r'_i is not included in S_{A}, the terminal 20 excludes r'_i from the resource set (S605), updates the resource set, and ends the pre-emption.

Here, the terminal 20 performing the power-saving operation (power saving UE) may execute data reception and/or data transmission only in the limited period. Accordingly, it is assumed that the terminal 20 is unable to suitably execute a re-evaluation operation or a pre-emption operation at the timing of T(r_0)-T₃ illustrated in Fig. 17. For example, sensing information required for determining the set S_{A} of resource candidates may be not acquired.

Therefore, it is necessary to define the operation of the terminal 20 performing the power-saving operation such that the terminal 20 performing the power-saving operation can suitably execute the re-evaluation or the pre-emption. For example, in a case where the terminal 20A transmits the signal to the terminal 20B through the sidelink, and the terminal 20A performs at least one of the reception and the sensing operation only at a specific timing, at least one operation of the re-evaluation and the preemption may be carried out by a predetermined method.

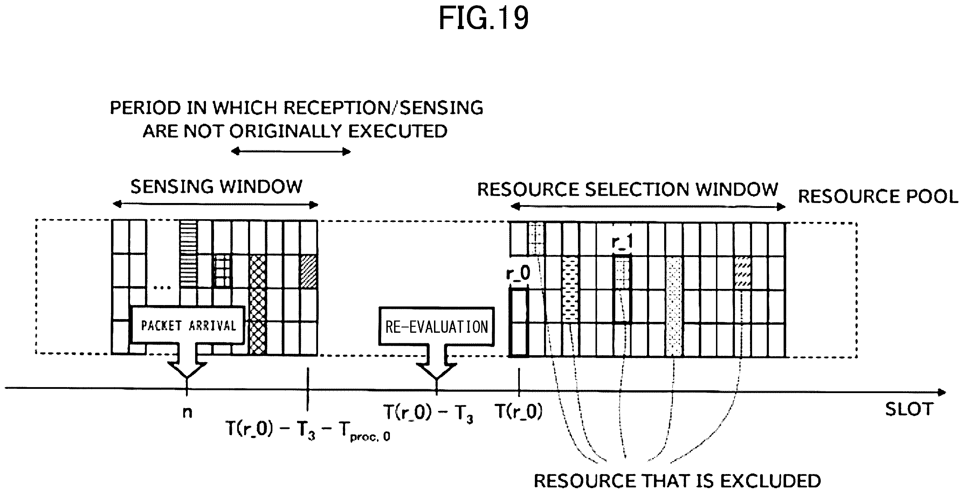

Fig. 19 is a diagram illustrating Example (1) of the re-evaluation or the pre-emption in the embodiment of the invention. The terminal 20A performing the power-saving operation may execute the reception and/or the sensing operation in a section period from a packet arrival time n to a specific time. As illustrated in Fig. 19, even at a time when the reception and/or the sensing operation is to be not originally performed by the power-saving operation, for example, the reception and/or the sensing operation may be performed in a section period in which the sensing window is configured. That is, the specific time described above may be a time T(r_0)-T₃-T_{proc,0} illustrated in Fig. 19. In addition, the specific time described above may be a time T(r_0)-T₃ illustrated in Fig. 19. The time T(r_0)-T₃-T_{proc,0} may correspond to a time at the end of the sensing window. The time T(r_0)-T₃ may correspond to a time for executing the re-evaluation or the pre-emption. The time T(r_0) may correspond to a time at which the resource r_0 that is already selected is positioned.

In addition, the packet arrival time n may be substituted with n-T_{proc,0}. The same applies to the followings. That is, the terminal 20A may execute the reception and/or the sensing operation in a section period from n-T_{proc,0} to the specific time. Note that, the terminal 20A may execute the reception and/or the sensing operation in a part of the section period from the packet arrival time n to the specific time.

The terminal 20A may execute at least one of the re-evaluation and the pre-emption at the time T(r_0)-T₃ illustrated in Fig. 19, based on the information acquired by the reception and/or the sensing operation performed in the section period from the packet arrival time n to the specific time, as described above.

The reception and/or the sensing operation are executed as described above, and thus, the accuracy of the re-evaluation operation and the preemption operation in the terminal 20A performing the power-saving operation can be improved.

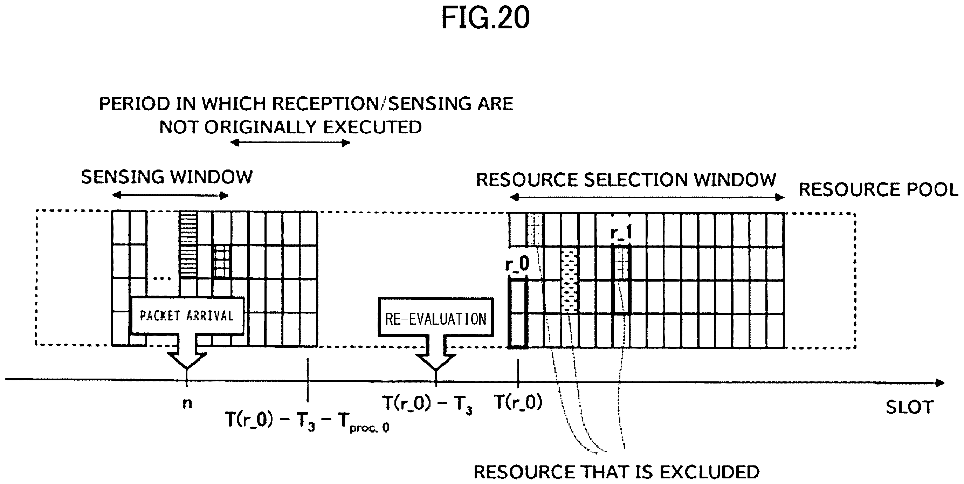

Fig. 20 is a diagram illustrating Example (2) of the re-evaluation or the pre-emption in the embodiment of the invention. The terminal 20A performing the power-saving operation may execute the reception and/or the sensing operation only at a timing when the reception and/or the sensing operation can be performed for the power-saving operation, in the section period from the packet arrival time n to the specific time. As illustrated in Fig. 20, the terminal 20A does not perform the reception and/or the sensing operation at the time when the reception and/or the sensing operation are not originally performed. Therefore, as illustrated in Fig. 20, a signal that is transmitted from another terminal 20 at the time when the reception and/or the sensing operation are not originally performed, is not used in the sensing operation.

The specific time described above may be a time T(r_0)-T₃ illustrated in Fig. 20. In addition, the specific time described above may be a time T(r_0)-T₃-T_{proc,0} illustrated in Fig. 20. The packet arrival time n may be substituted with n-T_{proc,0}. That is, the terminal 20A may execute the reception and/or the sensing operation only at the timing when the reception and/or the sensing operation can be performed, in the section period from n-T_{proc,0} to the specific time.

The terminal 20A may execute at least one of the re-evaluation and the pre-emption at the time T(r_0)-T₃ illustrated in Fig. 20, based on the information acquired by the reception and/or the sensing operation performed only at the timing when the reception and/or the sensing operation can be performed for the power-saving operation, in the section period from the packet arrival time n to the specific time, as described above. In addition, the sensing window in the re-evaluation and the preemption may include or need not include a timing when the reception and/or the sensing operation cannot be performed due to the power-saving operation.

The reception and/or the sensing operation are executed as described above, and thus, a power saving effect can be maintained in the terminal 20A performing the power-saving operation.

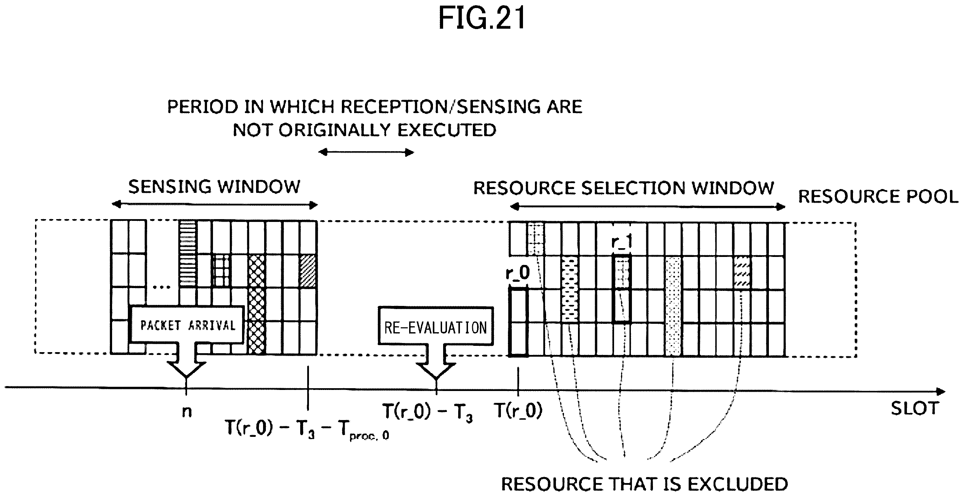

Fig. 21 is a diagram illustrating Example (3) of the re-evaluation or the pre-emption in the embodiment of the invention. Only a resource in which at least one of the re-evaluation and the pre-emption can be executed at T(r_0)-T₃ illustrated in Fig. 21 may be selected by a resource selection operation at the packet arrival time n. The resource r_0, the resource r_1, ... may be selected such that a time when the reception and/or the sensing operation are not performed does not occur between T_{A} and T_{B} described below. For example, T_{A} may be n, or may be n-T_{proc,0}. For example, T_{B} may be T(r_0)-T₃, or may be T(r_0)-T₃-T_{proc,0}. Fig. 21 is an example in which T_{B} is T(r_0)-T₃-T_{proc, 0}.

Note that, selecting only the resource in which at least one of the re-evaluation and the pre-emption can be executed by the resource selection operation at the packet arrival time n may be implemented by the configuration of the resource selection window.

Note that, selecting only the resource in which at least one of the re-evaluation and the pre-emption can be executed by the resource selection operation at the packet arrival time n may be implemented by excluding in advance a resource not satisfying a condition from the set SA of resource candidates.

The reception and/or the sensing operation are executed as described above, and thus, the accuracy of the re-evaluation operation and the preemption operation in the terminal 20A performing the power-saving operation can be improved, and the power saving effect can be maintained.

Note that, the examples described above may be applied to the terminal 20 in which configuration related to power saving is performed. The terminal 20 in which the configuration related to the power saving is performed may be a terminal 20 performing the partial sensing or a terminal 20 configured (in advance) to perform the partial sensing. Alternatively, the terminal 20 in which the configuration related to the power saving is performed may be a terminal 20 performing a sensing method different from the full sensing defined in release 16, may be a terminal 20 not performing the sensing, or may be a terminal 20 performing reception only at the limited time (for example, DRX).

Note that, the full sensing may mean sensing all the resources in the sensing window. The sensing window may be defined by a slot section period [n-T₀,n-T_{proc,0}], and n may be a slot corresponding to a packet arrival timing.

In the examples described above, a "case where at least one of the reception operation and the sensing operation is performed at a specific timing" may be substituted with a "case where the configuration related to the power saving is performed".

In the examples described above, the reception side terminal 20 may be a plurality of terminals 20, which may belong to the same group.

In the examples described above, both of the reception side terminal 20 and the transmission side terminal 20 may be the terminal 20 performing the power-saving operation.

The examples described above are not limited to the V2X terminal, and may be applied to terminals that perform D2D communication.

Note that, the terminal 20 may be aware of a timing when the reception of another terminal 20 can be performed and/or a timing when the transmission of another terminal 20 can be performed. The terminal 20 may become aware of the timing by determining the timing with technical specifications or pre-configuration, or with the indication of the timing from another terminal 20.

Note that, in the examples described above, the timing, that is, the time resource may be substituted with the frequency resource. For example, this may be applied to a case where at least one of the transmission/the reception/the sensing is performed, in a part of the frequency resource (for example, a part of the subchannels).

The terminal 20 may be aware of information related to the operation related to at least one of the re-evaluation and the pre-emption of another terminal 20, for example, whether or not to execute the examples described above or whether or not to execute at least one of the re-evaluation and the pre-emption. The terminal 20 may be aware of the information by technical specifications or pre-configuration, or by the indication of the information from another terminal 20. The terminal 20 may be operated based on the information, and for example, may execute the operation related to the resource selection based on the information.

According to the examples described above, the terminal 20 changes the operation related to the re-evaluation and the pre-emption, in accordance with a timing when the sensing can be performed at the time of performing the power-saving operation, and thus, is capable of maintaining the power saving effect while improving a sensing accuracy.

That is, it is possible to perform the sensing operation suitable for the power-saving operation, in terminal-to-terminal direct communication.

### (Device Structure)

Next, functional structure examples of the base station 10 and the terminal 20 that execute the processing and the operation described so far will be described. The base station 10 and the terminal 20 have a function of carrying out the examples described above. Here, each of the base station 10 and the terminal 20 may include only a part of the functions in the examples.

### <Base Station 10>

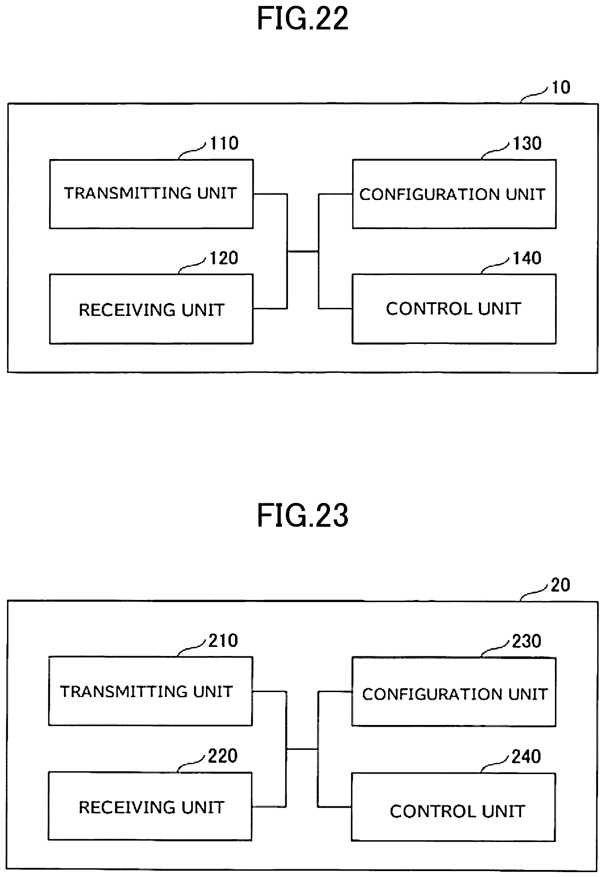

Fig. 22 is a diagram illustrating an example of a functional structure of the base station 10. As illustrated in Fig. 22, the base station 10 includes a transmitting unit 110, a receiving unit 120, a configuration unit 130, and a control unit 140. The functional structure illustrated in Fig. 22 is merely an example. Function segments and function units may have any name insofar as the operation according to the embodiment of the invention can be executed.

The transmitting unit 110 has a function of generating a signal to be transmitted to the terminal 20 side and of transmitting the signal over the radio. The receiving unit 120 has a function of receiving various signals transmitted from the terminal 20 and of acquiring, for example, information of a higher layer from the received signals. In addition, the transmitting unit 110 has a function of transmitting NR-PSS, NR-SSS, NR-PBCH, a DL/UL control signal, a DL reference signal, and the like to the terminal 20.

The configuration unit 130 stores configuration information that is pre-configured, and various configuration information items that are transmitted to the terminal 20 in a storage device, and reads out the information from the storage device, as necessary. The contents of the configuration information, for example, are information according to the configuration of the D2D communication, and the like.

As described in the examples, the control unit 140 performs processing according to configuration for the terminal 20 to perform the D2D communication. In addition, the control unit 140 transmits the scheduling of the D2D communication and DL communication to the terminal 20 through the transmitting unit 110. In addition, the control unit 140 receives information according to the HARQ response of the D2D communication and the DL communication from the terminal 20 through the receiving unit 120. A function unit relevant to the signal transmission in the control unit 140 may be included in the transmitting unit 110, and a function unit relevant to the signal reception in the control unit 140 may be included in the receiving unit 120.

### <Terminal 20>

Fig. 23 is a diagram illustrating an example of a functional structure of the terminal 20. As illustrated in Fig. 23, the terminal 20 includes a transmitting unit 210, a receiving unit 220, a configuration unit 230, and a control unit 240. The functional structure illustrated in Fig. 23 is merely an example. Function segments and function units may have any name insofar as the operation according to the embodiment of the invention can be executed.

The transmitting unit 210 prepares a transmission signal from the transmission data, and transmits the transmission signal over the radio. The receiving unit 220 receives various signals over the radio, and acquires a signal of a higher layer from the received signal of a physical layer. In addition, the receiving unit 220 has a function of receiving NR-PSS, NR-SSS, NR-PBCH, a DL/UL/SL control signal, a reference signal, and the like to be transmitted from the base station 10. In addition, for example, as the D2D communication, the transmitting unit 210 transmits the physical sidelink control channel (PSCCH), the physical sidelink shared channel (PSSCH), a physical sidelink discovery channel (PSDCH), a physical sidelink broadcast channel (PSBCH), and the like to the other terminal 20, and the receiving unit 220 receives PSCCH, PSSCH, PSDCH, PSBCH, or the like from the other terminal 20.

The configuration unit 230 stores various configuration information items received from the base station 10 or the terminal 20 by the receiving unit 220 in a storage device, and reads out the information from the storage device, as necessary. In addition, the configuration unit 230 also stores configuration information that is pre-configured. The contents of the configuration information, for example, are the information according to the configuration of the D2D communication, and the like.

As described in the examples, the control unit 240 controls D2D communication for establishing RRC connection with the other terminal 20. In addition, the control unit 240 performs processing according to the power-saving operation. In addition, the control unit 240 performs processing according to HARQ of the D2D communication and the DL communication. In addition, the control unit 240 transmits the information according to the HARQ response of the D2D communication and the DL communication to the other terminal 20 scheduled from the base station 10 to the base station 10. In addition, the control unit 240 may perform the scheduling of the D2D communication with respect to the other terminal 20. In addition, the control unit 240 may autonomously select a resource to be used in the D2D communication from the resource selection window, based on the sensing result, or may execute the reassessment or the preemption. In addition, the control unit 240 performs processing according to power saving in the transmission and reception of the D2D communication. A function unit relevant to the signal transmission in the control unit 240 may be included in the transmitting unit 210, and a function unit relevant to the signal reception in the control unit 240 may be included in the receiving unit 220.

### (Hardware Structure)

The block diagrams (Fig. 22 and Fig. 23) used in the description of the embodiment described above illustrate the block of function unit. Such function blocks (structure parts) are attained by at least one arbitrary combination of hardware and software. In addition, an attainment method of each of the function blocks is not particularly limited. That is, each of the function blocks may be attained by using one device that is physically or logically coupled, by directly or indirectly (for example, in a wired manner, over the radio, or the like) connecting two or more devices that are physically or logically separated and by using such a plurality of devices. The function block may be attained by combining one device described above or a plurality of devices described above with software.

The function includes determining, deciding, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a structure part) that functions transmission is referred to as the transmitting unit or the transmitter. As described above, the attainment method thereof is not particularly limited.

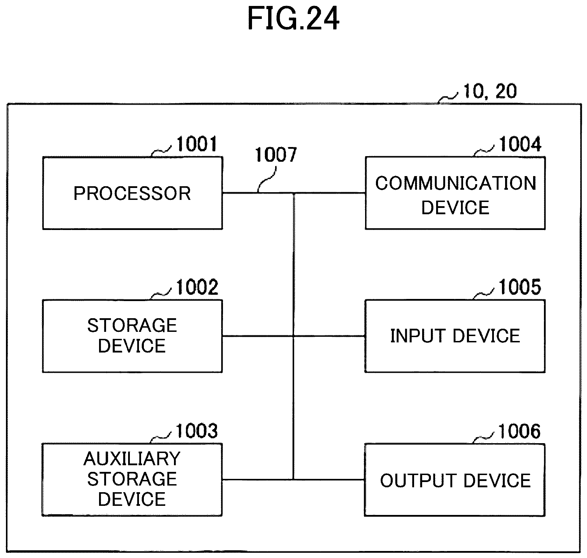

For example, the base station 10, the terminal 20, and the like in one embodiment of this disclosure may function as a computer for performing the processing of a radio communication method of this disclosure. Fig. 24 is a diagram illustrating an example of a hardware structure of the base station 10 and the terminal 20 according to one embodiment of this disclosure. The base station 10 and the terminal 20 described above may be physically structured as a computer device including a processor 1001, a storage device 1002, an auxiliary storage device 1003, a communication device 1004, an input device 1005, an output device 1006, a bus 1007, and the like.

Note that, in the following description, the word "device" can be replaced with a circuit, a device, a unit, or the like. The hardware structure of the base station 10 and the terminal 20 may be structured to include one or a plurality of devices illustrated in the drawings, or may be structured not to include a part of the devices.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be structured by a central processing unit (CPU) including an interface with respect to the peripheral equipment, a control device, an operation device, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processings. A program for allowing a computer to execute at least a part of the operations described in the embodiment described above is used as the program. For example, the control unit 140 of the base station 10 illustrated in Fig. 22 may be attained by a control program that is stored in the storage device 1002 and is operated by the processor 1001. In addition, for example, the control unit 240 of the terminal 20 illustrated in Fig. 23 may be attained by a control program that is stored in the storage device 1002 and is operated by the processor 1001. It has been described that the various processings described above are executed by one processor 1001, but the processings may be simultaneously or sequentially executed by two or more processors 1001. The processor 1001 may be implemented on one or more chips. Note that, the program may be transmitted from a network through an electric communication line.

The storage device 1002 is a computer readable recording medium, and for example, may include at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage device), and the like. The storage device 1002 is capable of retaining a program (a program code) that can be executed in order to carry out a communication method according to one embodiment of this disclosure, a software module, and the like.

The auxiliary storage device 1003 is a computer readable recording medium, and for example, may include at least one of an optical disc such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware for performing communication with respect to the computer through at least one of a wire network and a radio network (a transmitting and receiving device), and for example, is also referred to as a network device, a network controller, a network card, a communication module, and the like. The communication device 1004, for example, may include a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are implemented by being physically or logically separated.

The input device 1005 is an input device for receiving input from the outside (for example, a keyboard, a mouse, a microphone, a switch, a button, a sensor, and the like). The output device 1006 is an output device for carrying out output with respect to the outside (for example, a display, a speaker, an LED lamp, and the like). Note that, the input device 1005 and the output device 1006 may have an integrated structure (for example, a touch panel).

In addition, each of the devices such as the processor 1001 and the storage device 1002 may be connected by the bus 1007 for communicating information. The bus 1007 may be structured by using a single bus, or may be structured by using buses different for each of the devices.

In addition, the base station 10 and the terminal 20 may include hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be implemented by using at least one of the hardware devices.

### (Summary of Embodiment)

As described above, according to the embodiment of the invention, a terminal including: a receiving unit configured to execute sensing of a signal that is transmitted from another terminal in a limited first period; a control unit configured to determine a set of available resources by identifying a plurality of resources in a resource selection window, based on at least a part of a sensing result; and a transmitting unit configured to execute transmission to the another terminal by using a resource set selected from the set of resources, in which the control unit updates the resource set by identifying again the plurality of resources in the resource selection window, based on the sensing result in a second period, before executing the transmission, is provided.

According to the structure described above, the terminal 20 changes the operation related to the re-evaluation and the pre-emption, in accordance with the timing when the sensing can be performed at the time of performing the power-saving operation, and thus, can maintain the power saving effect while improving the sensing accuracy. That is, it is possible to perform the sensing operation suitable for the power-saving operation, in the terminal-to-terminal direct communication.

The second period may be a period from a packet arrival time to the update of the resource set. According to the structure described above, the terminal 20 can improve the sensing accuracy related to the re-evaluation and the pre-emption.

The second period may be a period included in the first period, in the period from the packet arrival time to the update of the resource set. According to the structure described above, the terminal 20 can maintain the power saving effect in the reassessment and the preemption.

The control unit may determine the resource set such that the second period is to be included in the first period. The terminal 20 changes the operation related to the re-evaluation and the pre-emption, in accordance with the timing when the sensing can be performed at the time of performing the power-saving operation, and thus, can maintain the power saving effect while improving the sensing accuracy.

The control unit may configure the resource selection window such that the second period is to be included in the first period. The terminal 20 changes the operation related to the re-evaluation and the pre-emption, in accordance with the timing when the sensing can be performed at the time of performing the power-saving operation, and thus, can maintain the power saving effect while improving the sensing accuracy.

In addition, according to the embodiment of the invention, a communication method for allowing a terminal to execute: executing sensing of a signal that is transmitted from another terminal in a limited first period; determining a set of available resources by identifying a plurality of resources in a resource selection window, based on at least a part of a sensing result; and executing transmission to the another terminal by using a resource set selected from the set of resources, in which the determining includes updating the resource set by identifying again the plurality of resources in the resource selection window, based on the sensing result in a second period, before executing the transmission, is provided.

According to the structure described above, the terminal 20 changes the operation related to the re-evaluation and the pre-emption, in accordance with the timing when the sensing can be performed at the time of performing the power-saving operation, and thus, can maintain the power saving effect while improving the sensing accuracy. That is, it is possible to perform the sensing operation suitable for the power-saving operation, in the terminal-to-terminal direct communication.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the function parts or the processing parts in the function block diagram does not necessarily correspond to a boundary between physical components. The operations of a plurality of function parts may be physically performed by one component, or the operation of one function part may be physically performed by a plurality of components. In a processing procedure described in the embodiment, a processing order may be changed, insofar as there is no contradiction. For the convenience of describing the processing, the base station 10 and the terminal 20 have been described by using a function block diagram, but such a device may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be carried out by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as a RRC message, and for example, may be a RRC connection setup message, a RRC connection reconfiguration message, and the like.

Each aspect/embodiments described in this disclosure may be applied to a at least one of a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, regarding the method described in this disclosure, the elements of various steps are presented by using an exemplary order, but are not limited to the presented specific order.

Here, a specific operation that is performed by the base station 10 may be performed by a higher node (upper node), in accordance with a case. In a network provided with one or a plurality of network nodes including the base station 10, it is obvious that various operations that are performed in order for communication with the terminal 20 can be performed by at least one of the base station 10 and a network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to the lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other device.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macrocell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting device, a receiving device, a communication device, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes a device that is not necessarily moved in a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a structure in which communication between the base station and the user terminal is replaced with communication between a plurality of terminals 20 (for example, may be referred to as device-to-device (D2D), vehicle-to-everything (V2X), and the like). In this case, the function of the base station 10 described above may be provided in the terminal 20. In addition, the words "up", "down", and the like may be replaced with words corresponding to the terminal-to-terminal communication (for example, "side"). For example, an up channel, a down channel, and the like may be replaced with a side channel.

Similarly, the user terminal in this disclosure may be replaced with the base station. In this case, the function of the user terminal described above may be provided in the base station.

The terms "determining" and "deciding" used in this disclosure may involve diverse operations. "Determining" and "deciding", for example, are capable of including "determining" and "deciding" with respect to judging, calculating, computing, processing, deriving, investigating, looking up (search, inquiry) (for example, looking up in a table, a database, or another data structure), and ascertaining, and the like. In addition, "determining" and "deciding" are capable of including "determining" and "deciding" with respect to receiving (for example, receiving information), transmitting (for example, transmitting information), input, output, and accessing (for example, accessing data in a memory), and the like. In addition, "determining" and "deciding" are capable of including "determining" and "deciding" with respect to resolving, selecting, choosing, establishing, comparing, and the like. That is, "determining" and "deciding" are capable of including "determining" and "deciding" with respect to any operation. In addition, "determining (deciding)" may be replaced with "assuming", "expecting", "considering", and the like.

The terms "connected" and "coupled", or any modification thereof indicate any direct or indirect connection or couple between two or more elements, and are capable of including a case where there are one or more intermediate elements between two elements that are "connected" or "coupled" to each other. The couple or connection between the elements may be physical couple or connection, may be logical couple or connection, or may be a combination thereof. For example, the "connection" may be replaced with "access". In a case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate "only based on", unless otherwise specified. In other words, the description "based on" indicates both "only based on" and "at least based on".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the structure of each of the devices described above may be replaced with a "unit", a "circuit", a "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may include one or a plurality of frames in a time domain. Each of one or a plurality of frames in the time domain may be referred to as a subframe. The subframe may further include one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame structure, specific filtering processing that is performed by the transceiver in a frequency domain, specific windowing processing that is performed by the transceiver in a time domain, and the like.

The slot may include one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may include one or a plurality of symbols in the time domain. In addition, the mini slot may be referred to as a subslot. The mini slot may include symbols of which the number is less than that of the slots. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit when transmitting a signal. Other designations respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe.

Here, TTI, for example, indicates minimum time unit of scheduling in radio communication. For example, in a LTE system, the base station performs scheduling for allocating a radio resource (a frequency bandwidth, transmission power, and the like, which can be used in each of the terminals 20) in TTI unit, with respect to each of the terminals 20. Note that, the definition of TTI is not limited thereto.

TTI may be transmission time unit of a data packet (a transport block), a code block, a codeword, and the like, which are subjected to channel coding, or may be processing unit of scheduling, link adaptation, and the like. Note that, when TTI is applied, a time zone in which the transport block, the code block, the codeword, and the like are actually mapped (for example, the number of symbols) may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) structuring the minimum time unit of the scheduling may be controlled.

TTI having a time length of 1 ms may be referred to as a common TTI (TTI in LTE Rel.8-12), a normal TTI, a long TTI, a common subframe, a normal subframe, a long subframe, a slot, and the like. TTI shorter than the common TTI may be referred to as a shortened TTI, a short TTI, a partial TTI (or a fractional TTI), a shortened subframe, a short subframe, a mini slot, a subslot, a slot, and the like.

Note that, the long TTI (for example, the common TTI, the subframe, and the like) may be replaced with TTI having a time length of longer than or equal to 1 ms, and the short TTI (for example, the shortened TTI and the like) may be replaced with TTI having a TTI length of shorter than a TTI length of the long TTI and longer than or equal to 1 ms.

The resource block (RB) is resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be decided based on the numerology.

In addition, the time domain of RB may include one or a plurality of symbols, or may be the length of one slot, one mini slot, one subframe, or one TTI. One TTI, one subframe, and the like may respectively include one or a plurality of resource blocks.

Note that, one or a plurality of RBs may be referred to as a physical resource block (physical RB: PRB), a sub-carrier group (SCG), a resource element group (REG), a PRB pair, a RB pair, and the like.

In addition, the resource block may include one or a plurality of resource elements (RE). For example, one RE may be a radio resource domain of one subcarrier and one symbol.

A bandwidth part (BWP) (may be referred to as a partial bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). Regarding the terminal 20, one or a plurality of BWPs may be configured within one carrier.

At least one of the configured BWPs may be active, and it may not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the structure of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

Note that, in this disclosure, S_{A} is an example of the set of available resources.

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### EXPLANATIONS OF LETTERS OR NUMERALS

- 10: BASE STATION
- 110: TRANSMITTING UNIT
- 120: RECEIVING UNIT
- 130: CONFIGURATION UNIT
- 140: CONTROL UNIT
- 20: TERMINAL
- 210: TRANSMITTING UNIT
- 220: RECEIVING UNIT
- 230: CONFIGURATION UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A terminal comprising:
a receiving unit configured to execute sensing of a signal that is transmitted from another terminal in a limited first period;
a control unit configured to determine a set of resources that are available, by identifying a plurality of resources in a resource selection window, based on at least a part of a result of the sensing; and
a transmitting unit configured to execute transmission to the another terminal by using a resource set selected from the set of resources,
wherein the control unit updates the selected resource set by identifying again the plurality of resources in the resource selection window, based on a result of the sensing in a second period, before executing the transmission.

2. The terminal according to claim 1,
wherein the second period is a period from a packet arrival time to the update of the resource set.

3. The terminal according to claim 1,
wherein the second period is a period from a packet arrival time to the update of the resource set, the period being included in the first period.

4. The terminal according to claim 1,
wherein the control unit determines the resource set such that the second period is included in the first period.

5. The terminal according to claim 1,
wherein the control unit configures the resource selection window such that the second period is included in the first period.

6. A communication method for allowing a terminal to execute:
executing sensing of a signal that is transmitted from another terminal in a limited first period;
determining a set of available resources by identifying a plurality of resources in a resource selection window, based on at least a part of a result of the sensing; and
executing transmission to the another terminal by using a resource set selected from the set of resources,
wherein the determining includes updating the resource set by identifying again the plurality of resources in the resource selection window, based on the sensing result in a second period, before executing the transmission.
